# EUROPÄISCHE PATENTANMELDUNG

(11) **EP 4 837 736 A1**
(43) Veröffentlichungstag der Anmeldung: **11.11.2026**
(21) Anmeldenummer: 26177136.4
(22) Anmeldetag: 07.05.2026
(51) Int. Cl.: B32B 21/04, B32B 3/02, B32B 3/06, B32B 3/10, B32B 3/14, B32B 3/18, B32B 7/08, E04C 2/12

(54) **HOLZBAUELEMENT UMFASSEND EINE MITTELLAGE SOWIE ZWEI DECKLAGEN**

(30) Priorität: 08.05.2025 DE 102025117785
(71) Anmelder: Faulstich, Stephanus, 36115 Ehrenberg-Melperts (DE)
(72) Erfinder: Faulstich, Stephanus, 36115 Ehrenberg-Melperts (DE)
(74) Vertreter: Aera A/S

(57) **Zusammenfassung**

Die Erfindung betrifft ein Holzbauelement, umfassend eine Mittellage sowie zwei Decklagen, die beidseitig der Mittellage angeordnet sind, wobei jede der drei Lagen aus mehreren Holzbohlen hergestellt ist, wobei die Holzbohlen innerhalb jeder Lage in Längsrichtung derart parallel zueinander angeordnet sind, dass die einander zugewandten Stirnseiten benachbarter Holzbohlen aneinander angrenzen, sodass in jeder der drei Lagen jeweils eine Flachseite jeder Holzbohle in einer gemeinsamen Ebene der jeweiligen Lage liegt, wobei die Holzbohlen der Mittellage quer zur Längsrichtung der Holzbohlen der beiden Decklagen verlaufen, wodurch sich eine kreuzweise Anordnung der Holzbohlen in unmittelbar benachbarten Lagen ergibt, mit einer Mehrzahl von Schwalbenschwanzverbindungen, jeweils umfassend ein Zinkenstück und ein komplementäres Schwalbenstück, wobei die Holzbohlen der Mittellage und die Holzbohlen der ersten Decklage an ihren einander zugewandten Flachseiten mindestens eine erste Schwalbenschwanzverbindung sowie die Holzbohlen der Mittellage und die Holzbohlen der zweiten Decklage an ihren einander zugewandten Flachseiten mindestens eine zweite Schwalbenschwanzverbindung miteinander ausbilden, wobei die mindestens eine erste Schwalbenschwanzverbindung quer zur Längenerstreckung der Holzbohlen der ersten Decklage und die zweite Schwalbenschwanzverbindung parallel zur Längenerstreckung der Holzbohlen der zweiten Decklage verläuft. Ferner betrifft die Erfindung eine Holzbohle zur Herstellung eines Holzbauelements sowie die Verwendung einer solchen Holzbohle.

## Beschreibung

Die Erfindung betrifft ein Holzbauelement umfassend eine Mittellage sowie zwei Decklagen, im Einzelnen gemäß den Merkmalen der unabhängigen Ansprüche. Ferner betrifft die Erfindung eine Holzbohle sowie die Verwendung dieser bei einem erfindungsgemäßen Holzbauelement. Weiterhin betrifft die Erfindung einen Bausatz zur Herstellung eines erfindungsgemäßen Holzbauelements.

Im Stand der Technik sind flächige Holzbauelemente bekannt, die aus mehreren Lagen von Holzbohlen aufgebaut sind. Typischerweise erfolgt die Verbindung der einzelnen Lagen durch Verleimung oder mechanische Verbindungsmittel wie Schrauben oder Nägel. Zur Stabilisierung wird dabei häufig auf eine kreuzweise Anordnung von Brettern zwischen zwei parallel zueinander verlaufenden Lagen aus Holzbohlen zurückgegriffen, wodurch eine gewisse Formstabilität erzielt wird. Eine derartige Anordnung ist beispielsweise aus der EP 3741921 A1 oder EP 2821191 A1 bekannt geworden.

Solche konventionellen Verbindungen haben jedoch den Nachteil, dass sie entweder durch aufwändige Verbindungsmittel oder durch Verklebungen hergestellt werden müssen, was die Montage und Demontage erschwerten. Außerdem kann die ökologische Nachhaltigkeit durch den Einsatz von Klebstoffen beeinträchtigt werden. Die mechanische Belastbarkeit und Selbsttragfähigkeit solcher Elemente ist zudem limitiert, insbesondere bei rein flächigen Klebeverbindungen ohne zusätzliche Verankerung.

Vor dem Hintergrund dieses Standes der Technik soll die Aufgabe der vorliegenden Erfindung sein, ein Holzbauelement und eine Holzbohle sowie deren Verwendung bereitzustellen, welche eine besonders stabile und gleichzeitig einfach montierbare und demontierbare Verbindung der einzelnen Lagen ermöglichen.

Diese Aufgabe wird durch das erfindungsgemäße Holzbauelement, die Holzbohle für ein solches sowie deren Verwendung bei einem erfindungsgemäßen Holzbauelement gemäß den unabhängigen Ansprüchen gelöst. Die abhängigen Ansprüche stellen besonders bevorzugte Ausführungsformen der Erfindung dar.

Ein erfindungsgemäßes Holzbauelement umfasst, oder besteht aus, eine Mittellage sowie zwei Decklagen, die beidseitig der Mittellage angeordnet (oder anordenbar) sind. Jede der drei Lagen ist aus mehreren Holzbohlen hergestellt (oder herstellbar), wobei die Holzbohlen innerhalb jeder Lage in Längsrichtung derart parallel zueinander angeordnet sind, derart, dass die einander zugewandten Stirnseiten benachbarter Holzbohlen aneinander angrenzen - sodass sie sich an ihren Stirnseiten berühren - und sodass in jeder der drei Lagen jeweils eine Flachseite jeder Holzbohle in einer gemeinsamen Ebene der jeweiligen Lage liegt. Dabei ist die Ebene parallel zu einer Flachseite des Holzbauelements. Gemeint ist damit, dass die jeweilige Ebene durch die genannte Nebeneinanderanordnung mehrerer Holzbohlen Stirnseite an Stirnseite erzielbar ist. Die Holzbohlen der Mittellage verlaufen quer zur Längsrichtung der Holzbohlen der beiden Decklagen, wodurch sich eine kreuzweise Anordnung der Holzbohlen in unmittelbar benachbarten Lagen ergibt. Man könnte auch sagen, dass die Holzbohlen der Mittellage in Bezug auf die Holzbohlen der beiden Decklagen - bezogen auf ihre Längserstreckung - zueinander um 90° versetzt angeordnet sind. Das Holzbauelement weist eine Mehrzahl von Schwalbenschwanzverbindungen auf, jeweils umfassend ein Zinkenstück und ein komplementäres Schwalbenstück, wobei die Holzbohlen der Mittellage und die Holzbohlen der ersten Decklage an ihren einander zugewandten Flachseiten mindestens eine erste Schwalbenschwanzverbindung sowie die Holzbohlen der Mittellage und die Holzbohlen der zweiten Decklage an ihren einander zugewandten Flachseiten mindestens eine zweite Schwalbenschwanzverbindung miteinander ausbilden, wobei die mindestens eine erste Schwalbenschwanzverbindung quer zur Längenerstreckung der Holzbohlen der ersten Decklage und die zweite Schwalbenschwanzverbindung parallel zur Längenerstreckung der Holzbohlen der zweiten Decklage verläuft. Man könnte auch sagen, dass die einzelnen Lagen sandwichartig übereinander angeordnet sind, sodass die Decklagen die Mittellage zwischen einander aufnehmen. Alle drei Lagen sind damit unmittelbar aufeinander angeordnet und liegen bevorzugt vollflächig aufeinander auf. Auf diese Weise sind die beiden Decklagen voneinander durch die Mittellage getrennt.

Genauer gesagt verläuft die Längenerstreckung der mindestens einen ersten Schwalbenschwanzverbindung quer zur Längenerstreckung der Holzbohlen der ersten Decklage und die Längenerstreckung der zweiten Schwalbenschwanzverbindung parallel zur Längenerstreckung der Holzbohlen der zweiten Decklage.

Bevorzugt bildet jede Holzbohle der Mittellage mehrere erste Schwalbenschwanzverbindungen mit der jeweiligen Holzbohle der Decklage aus. So kann eine Schwalbenschwanzverbindung in der Mitte der Holzbohle der Mittellage und zwei "halbe" Schwalbenschwanzverbindungen an deren (Längs-)Stirnseiten ausgebildet sein, die von den unmittelbar aneinander angrenzenden Holzbohlen der Mittellage ausgeführt oder gemeinsam begrenzt werden. Dies gilt beispielsweise für die ersten Schwalbenschwanzverbindungen. Das gleiche kann auch für die zweiten Schwalbenschwanzverbindungen gelten, sodass diese derart beabstandet sind, dass jeweils die Holzbohlen der Decklagen eine Schwalbenschwanzverbindung in deren Mitte und zwei "halbe" Schwalbenschwanzverbindungen an deren (Längs-)Stirnseiten ausbilden. Das bedeutet, dass der Abstand der Schwalbenschwanzverbindungen einer und derselben Holzbohle der Mittellage (der ersten Schwalbenschwanzverbindungen) genauso groß ist wie der Abstand der Schwalbenschwanzverbindungen einer und derselben Holzbohle der Decklage (der zweiten Schwalbenschwanzverbindungen). Man könnte auch sagen, dass die ersten und zweiten Schwalbenschwanzverbindungen hinsichtlich ihrer Form und ihres Abstands identisch ausgeführt sind.

Gemäß einer bevorzugten Ausführungsform sind die ersten und zweiten Schwalbenschwanzverbindungen hinsichtlich ihres Abstands zueinander identisch ausgeführt.

Nach einer weiteren bevorzugten Ausführungsform sind die ersten und zweiten Schwalbenschwanzverbindungen sowohl hinsichtlich ihrer Form als auch hinsichtlich ihres Abstands identisch ausgeführt.

Grundsätzlich wäre es denkbar, dass mehr als eine Mittellage vorgesehen sein könnte. Es könnten aber auch genau eine Mittellage und genau zwei Decklagen und somit genau drei Lagen pro Holzbauelement vorgesehen sein.

Die Schwalbenschwanzverbindungen können so ausgebildet sein, dass sich das Zinkenstück bzw. das komplementäre Schwalbenstück seitlich, also über einen Teil der Stirnseite erstreckt, sodass sie über diese Stirnseite in einander einführbar sind, um die jeweilige Schwalbenschwanzverbindung herzustellen und ebenso auch über die Stirnseite wieder voneinander trennbar sind, um die jeweilige Schwalbenschwanzverbindung wieder zu demontieren. Die Schwalbenschwanzverbindungen verlaufen also von Stirnseite zu Stirnseite der jeweiligen Holzbohle und erstrecken sich entlang der genannten Flachseiten der Holzbohlen.

Gemäß einer bevorzugten Ausführungsform ist das Holzbauelement derart ausgebildet, dass die Schwalbenschwanzverbindungen ausschließlich einen translatorischen Freiheitsgrad zulassen, während die übrigen translatorischen und rotatorischen Freiheitsgrade gesperrt sind.

Auf diese Weise kommt das Holzbauelement ohne zusätzliche Verbindungsmittel wie Schrauben oder Leim aus und ist selbsttragend. Dadurch können die drei Lagen frei von zusätzlichen, bevorzugt kraft- und/oder formschlüssigen, insbesondere zerstörungsfrei lösbaren Verbindungsmitteln, wie Schrauben sein, wobei die Holzbohlen einer jeden Lage untereinander oder die Mittellage und die Decklagen miteinander verleimt sein können. Alternativ ist das Holzbauelement frei von einer Verleimung und durch die Geometrie der Verbindung allein stabilisiert. So kann auf Holzbolzen, die durch Aufquellen starr mit dem Holzbauelement verbindbar sind und damit nicht mehr zerstörungsfrei lösbar sind, verzichtet werden. Das Holzbauelement kann dadurch selbsttragend/selbsthemmend und frei von weiteren Verbindungselementen ausgeführt sein. Damit sind die Schwalbenschwanzverbindungen auch ohne Werkzeug, ausschließlich von Hand montierbar und demontierbar. Auf diese Weise kann das gesamte Holzbauelement einfach von Hand durch Zusammenstecken aufgebaut und durch Auseinanderbauen der Schwalbenschwanzverbindungen zwischen den Holzbohlen wieder abgebaut werden.

Gemäß einer besonderen Ausführungsform ist das Holzbauelement frei von Schrauben, Nägeln und/oder Bolzen.

Nach einer anderen besonderen Ausführungsform ist das Holzbauelement frei von Leim.

Gemäß einer bevorzugten Ausführungsform sind die Lagen ausschließlich durch die Schwalbenschwanzverbindungen miteinander verbunden.

Nach einer weiteren bevorzugten Ausführungsform ist das Holzbauelement werkzeugfrei montierbar.

Nach einer bevorzguten Ausführungsform ist das Holzbauelement ausschließlich von Hand montierbar und demontierbar.

Gemäß einer weiteren bevorzugten Ausführungsform ist das Holzbauelement vollständig in seine Einzelbohlen zerlegbar.

Ein selbsttragendes Bauelement im Holzbau ist so konzipiert, dass es ohne zusätzliche Tragkonstruktionen seine eigene Last sowie äußere Einwirkungen wie Nutzlasten oder Wind aufnehmen und in tragfähige Bauteile weiterleiten kann. Besteht ein solches Element aus mehreren Lagen, die ausschließlich durch Formschluss miteinander verbunden sind - also ohne Verklebung oder mechanische Verbindungsmittel - ergibt sich die Tragfähigkeit allein aus der Geometrie, der passgenauen Verbindung der Einzelteile und dem Materialverhalten. Durch die formschlüssige Fügung entsteht ein kraftschlüssiges Gefüge, das als Einheit wirkt und lastabtragend funktioniert. Die einzelnen Lagen stützen sich dabei gegenseitig ab und sorgen gemeinsam dafür, dass das Element als selbsttragend bezeichnet werden kann.

Das erfindungsgemäße Holzbauelement ist flächig oder plattenförmig und insbesondere als Holzverbundplatte ausgebildet. Die Dicke oder Tiefe des Holzbauelements, die in Querrichtung zur Längen- und Breitenerstreckung, also senkrecht auf der Flachseite des Holzbauelements steht, beträgt ein Mehrfaches der Dicke oder Tiefe der aus diesem hergestellten Holzbohlen.

Mit Längenerstreckung (kurz: Länge) ist diejenige Richtung gemeint, die parallel zur Längsachse der jeweiligen Holzbohle verläuft. Die Breitenerstreckung (kurz: Breite) ist bezogen auf die Flachseite, diejenige, die quer zur Längenerstreckung verläuft. Die Holzbohlen sind hinsichtlich deren Länge so bemessen, dass sie länger sind als breit. Die Dicke, Tiefe oder Tiefenerstreckung ergibt sich aus der Senkrechten zu der von der Flachseite aufgespannten Ebene. Die Tiefe ist bei den erfindungsgemäßen Holzbohlen meist ein Bruchteil der Breite.

Vorteilhaft umfasst das Holzbauelement ausschließlich formschlüssige Verbindungen, wobei die Holzbohlen der drei Lagen lediglich mittels der Schwalbenschwanzverbindungen untereinander verbunden oder verbindbar sind, wobei bevorzugt die Schwalbenschwanzverbindungen einstückig von den entsprechenden einander gegenüberliegenden Flachseiten der jeweiligen Holzbohlen der Mittellage und der Decklage ausgebildet werden. Man könnte auch sagen, dass die Holzbohlen die Schwalbenschwanzverbindungen gemeinsam ausbilden oder begrenzen. Sie sind somit ein Teil der Holzbohlen selbst. Somit wird eine Schwalbenschwanzverbindung ausschließlich von zwei unmittelbar zueinander benachbarten Holzbohlen der jeweiligen Lage ausgebildet, ein separates drittes Teil ist nicht erforderlich. Die Schwalbenschwanzverbindungen können die einzige formschlüssige Befestigung sein. Dadurch ergibt sich eine besonders einfache De-/Montage.

Bevorzugt ist das Zinkenstück von der Holzbohle der Mittellage und das komplementäre Schwalbenstück von der Holzbohle der Decklage ausgebildet oder umgekehrt. Das Zinkenstück oder das Schwalbenstück ist einstückig mit der Holzbohle ausgeführt oder von dieser ausgebildet. Dadurch ergibt sich eine besonders stabile und montagefreundliche Verbindung, denn die Schwalbenschwanzverbindung kann durch Ein- oder Herausschieben z.B. des Zinkenstücks aus dem Schwalbenstück hergestellt oder aufgelöst werden, und zwar in Längsrichtung der Schwalbenschwanzverbindung, also die Richtung, die eine Bewegung zur Herstellung/Lösung dieser Verbindung ermöglicht, zumeist senkrecht auf die Stirnseite der Holzbohle.

Nach einer besonderen Ausführungsform sind die Schwalbenschwanzverbindungen im Wesentlichen trapezförmig, tannenbauförmig oder T-förmig ausgeführt. Diese Geometrien ermöglichen eine selbsthemmende und rein formschlüssige Verbindung, die eine einfache und stabile Montage erlaubt, wobei die Schwalbenschwanzverbindungen ausschließlich durch die einander zugewandten Außenflächen der Mittellage und der Decklagen ausgeführt werden. Diese spezielle Geometrie führt zu einer rein formschlüssigen und selbsthemmenden Verbindung zwischen den benachbarten Lagen aus Holzbohlen. Bei einer formschlüssigen Verbindung blockiert ein Verbindungspartner (z.B. das Schwalbenstück) die Bewegung des anderen (z.B. des Zinkenstücks). Bei einer erfindungsgemäßen Schwalbenschwanzverbindung sind es drei Flächenpaare die gesperrt werden. Also bis auf einen translatorischen Freiheitsgrad sind durch die Schwalbenschwanzverbindung alle verbleibenden translatorischen und rotatorischen Freiheitsgrade gesperrt (f=1). Das bedeutet, dass das Zinkenstück nur entlang des Schwalbenstücks längs, also in Längserstreckung der jeweiligen Schwalbenschwanzverbindung - meist senkrecht zu der Stirnseite der Holzbohle - verschiebbar ist.

Selbsthemmung bedeutet in diesem Zusammenhang, dass sich die Verbindung bei Belastung nicht unbeabsichtigt löst. Technisch betrachtet beschreibt Selbsthemmung den Zustand, bei dem die Form der Verbindung (insbesondere die Neigungswinkel der Flächen der Schwalbenschwanzverbindungen) so ausgelegt ist, dass eine Bewegung des Verbindungspartners (Zinkenstück, Schwalbenstück) ohne äußere Krafteinwirkung ausgeschlossen ist. Bei den Schwalbenschwanzverbindungen wird dies dadurch erreicht, dass mindestens drei gegenüberliegende Flächenpaare vorhanden sind, die nahezu alle translatorischen und rotatorischen Freiheitsgrade blockieren - lediglich ein einziger Freiheitsgrad bleibt erhalten.

Die Folge ist eine besonders feste, formstabile und gleichzeitig werkzeugfreie Verbindung, die auch bei dynamischen Belastungen zuverlässig hält. Das Holzbauelement ist dadurch ohne zusätzliche Verbindungsmittel montierbar und ebenso leicht demontierbar, wodurch es sich auch für reversible oder mobile Anwendungen eignet.

Vorteilhaft berühren sich die einander zugewandten Flachseiten der Decklagen und der Mittellage sowie die einander zugewandten Stirnseiten der Holzbohlen einer jeweiligen Lage im zusammengebauten Zustand des Holzbauelements vollflächig. Das bedeutet, dass die beiden Decklagen und die Mittellage, also deren entsprechende Holzbohlen, sich über die gesamte Fläche des Holzbauelements (Längen- und Breitenerstreckung) erstrecken. Anders ausgedrückt, berühren sich die Decklagen, die beidseits der Mittellage angeordnet sind nicht gegenseitig, sondern sind vollständig durch die Mittellage getrennt.

Nach einer besonderen Ausführungsform sind zumindest die Holzbohlen der Mittellage an wenigstens einer ihrer Flachseiten mit Entlastungsnuten versehen, wobei die Entlastungsnuten parallel zur Längserstreckung der Holzbohle, insbesondere parallel zur Längenerstreckung der durch die Holzbohlen verlaufenden Schwalbenschwanzverbindungen verlaufen. Auch könnten die Holzbohlen der einen oder der anderen Decklage entsprechende Entlastungsnuten aufweisen. Durch die Entlastungsnuten kann die Spannungsrissbildung vermieden und die Maßhaltigkeit verbessert werden.

Gemäß einer bevorzugten Ausführungsform weisen zusätzlich Holzbohlen wenigstens einer Decklage, vorzugsweise Holzbohlen einer ersten und einer zweiten Decklage, Entlastungsnuten auf. Die Entlastungsnuten sind hierbei wenigstens in wenigstens einer Holzbohle einer Decklage vorhanden. Vorzugsweise weisen eine Vielzahl an Holzbohlen einer Decklage Entlastungsnuten auf.

Vorteilhaft sind die Holzbohlen an den einander zugewandten Stirnseiten der jeweiligen Lage entlang deren Längenerstreckung mittels einer Feder-Nut-Verbindung formschlüssig miteinander verbindbar ausgeführt, wobei die eine (Längs-)Stirnseite der einen Holzbohle die Nut und die andere (Längs-)Stirnseite derselben Holzbohle die zur Nut komplementäre Feder ausbildet. Dies ermöglicht eine sichere Verbindung innerhalb einer jeweiligen Lage.

In einer bevorzugten Ausführungsform weisen sämtliche Holzbohlen der Mittellage, der ersten Decklage und der zweiten Decklage an ihren einander zugewandten Stirnseiten eine Feder-Nut-Verbindung auf.

Nach einer bevorzugten Ausführungsform weist jede Holzbohle an einer Stirnseite eine Nut und an der gegenüberliegenden Stirnseite eine hierzu komplementäre Feder auf.

Gemäß einer weiteren bevorzugten Ausführungsform ist die Feder-Nut-Verbindung entlang der gesamten Stirnseite ausgebildet.

Nach einer bevorzugten Ausführungsform bewirkt die Feder-Nut-Verbindung innerhalb jeder Lage eine luftdichte Fügung benachbarter Holzbohlen.

Dabei können die der Mittellage abgewandte(n) Flachseite(n) (Außenseite(n)) wenigstens einer Decklage, bevorzugt der beiden Decklagen, eben ausgeführt sein.

Das Holzbauelement kann auch eine Vielzahl an Mittellagen aufweisen.

Gemäß einer Ausführungsform umfasst, oder besteht aus, das Holzbauelement wenigstens zwei Mittellagen, vorzugsweise zwei Mittellagen, sowie zwei Decklagen.

Nach einer bevorzugten Ausführungsform sind die wenigstens zwei Mittellagen flächig aneinander angeordnet.

Gemäß einer weiteren bevorzugten Ausführungsform sind die wenigstens zwei Mittellagen kreuzweise zueinander angeordnet.

Nach einer weiteren bevorzugten Ausführungsform sind die wenigstens zwei Mittellagen um 90° zueinander versetzt angeordnet.

Gemäß einer weiteren besonderen Ausführungsform greifen die wenigstens zwei Mittellagen mittels Schwalbenschwanzverbindungen ineinander.

Gemäß einer bevorzugten Ausführungsform ist auf jeder der beiden Außenseiten der aus wenigstens zwei Mittellagen gebildeten Anordnung jeweils eine Decklage angeordnet.

Gemäß einer bevorzugten Ausführungsform verlaufen die Holzbohlen der beiden Decklagen parallel zueinander.

Gemäß einer bevorzugten Ausführungsform ist wenigstens eine der Decklagen kreuzweise zu der unmittelbar benachbarten Mittellage angeordnet.

Gemäß einer bevorzugten Ausführungsform umfasst, oder besteht aus, das Holzbauelement aus wenigstens drei Mittellagen, vorzugsweise drei Mittellagen, sowie zwei Decklagen.

Gemäß einer weiteren bevorzugten Ausführungsform sind die wenigstens drei Mittellagen derart übereinander angeordnet, dass unmittelbar benachbarte Mittellagen jeweils kreuzweise zueinander verlaufen.

Gemäß einer bevorzugten Ausführungsform sind die wenigstens drei Mittellagen in alternierender Orientierung angeordnet.

Nach einer weiteren bevorzugten Ausführungsform verlaufen die Holzbohlen einer ersten und einer dritten Mittellage parallel zueinander und die Holzbohlen der dazwischen angeordneten zweiten Mittellage quer hierzu.

Nach einer weiteren bevorzugten Ausführungsform sind die wenigstens drei Mittellagen jeweils mittels Schwalbenschwanzverbindungen miteinander verbunden.

Gemäß einer bevorzugten Ausführungsform ist die erste Decklage auf einer Außenseite der aus den wenigstens drei Mittellagen gebildeten Anordnung und die zweite Decklage auf der gegenüberliegenden Außenseite angeordnet.

Nach einer bevorzugten Ausführungsform umfasst das Holzbauelement wengistens vier Mittellagen, vorzugsweise vier Mittellagen, sowie zwei Decklagen.

Gemäß einer bevorzugten Ausführungsform sind sämtliche unmittelbar benachbarten Lagen des Holzbauelements kreuzweise zueinander angeordnet.

Nach einer weiteren bevorzugten Ausführungsform verlaufen die Holzbohlen jeder zweiten Lage parallel zueinander, während die Holzbohlen der jeweils dazwischenliegenden Lagen quer hierzu verlaufen.

Gemäß einer bevorzugten Ausführungsform sind sämtliche unmittelbar benachbarten Lagen mittels Schwalbenschwanzverbindungen miteinander verbunden.

Nach einer weiteren bevorzugten Ausführungsform sind die beiden äußersten Lagen als Decklagen und die dazwischenliegenden Lagen als Mittellagen ausgebildet.

Nach einer bevorzugten Ausführungsform ist das Holzbauelement vierlagig ausgeführt.

Nach einer weiteren bevorzugten Ausführungsform ist das Holzbauelement fünflagig ausgeführt.

Nach einer weiteren bevorzugten Ausführungsform ist das Holzbauelement sechslagig ausgeführt.

Nach einer weiteren bevorzugten Ausführungsform ist das Holzbauelement aus einer geraden Anzahl von Lagen aufgebaut.

Nach einer weiteren bevorzugten Ausführungsform ist das Holzbauelement aus einer ungeraden Anzahl von Lagen aufgebaut.

Gemäß einer bevorzugten Ausführungsform umfasst das Holzbauelement genau eine Mittellage und zwei Decklagen, wobei die Lagen ausschließlich durch Schwalbenschwanzverbindungen miteinander verbunden sind und die Holzbohlen innerhalb jeder Lage zusätzlich mittels Feder-Nut-Verbindungen miteinander verbunden sind.

Nach einer weiteren bevorzugten Ausführungsform umfasst das Holzbauelement genau eine Mittellage und zwei Decklagen, wobei die Schwalbenschwanzverbindungen trapezförmig ausgeführt sind, die Decklagen auf ihren Außenseiten eben ausgebildet sind und das Holzbauelement frei von Leim und Schrauben ist.

Nach einer anderen bevorzugten Ausführungsform umfasst das Holzbauelement zwei Mittellagen und zwei Decklagen, wobei sämtliche unmittelbar benachbarten Lagen kreuzweise zueinander angeordnet und mittels Schwalbenschwanzverbindungen verbunden sind.

Gemäß einer bevorzugten Ausführungsform umfasst das Holzbauelement drei Mittellagen und zwei Decklagen, wobei die Mittellagen in alternierender Orientierung angeordnet sind und die beiden äußeren Decklagen auf den gegenüberliegenden Außenseiten der Mittellagenanordnung angeordnet sind.

Nach einer bevorzugten Ausführungsform weist jede Holzbohle der Mittellage an jeder Flachseite eine mittig angeordnete vollständige Schwalbenschwanzverbindung und zwei stirnseitige Teil-Schwalbenschwanzverbindungen auf, wobei die Abstände der ersten und zweiten Schwalbenschwanzverbindungen identisch sind.

Nach einer weiteren bevorzugten Ausführungsform ist das Holzbauelement vollständig lösbar, ausschließlich von Hand montierbar und demontierbar sowie frei von zusätzlichen Verbindungsmitteln.

Gemäß einer Ausführungsform umfasst, oder besteht aus, das Holzbauelement, eine Mittellage sowie zwei Decklagen, die beidseitig der Mittellage angeordnet sind, wobei jede der drei Lagen aus mehreren Holzbohlen hergestellt ist, wobei die Holzbohlen innerhalb jeder Lage in Längsrichtung derart parallel zueinander angeordnet sind, dass die einander zugewandten Stirnseiten benachbarter Holzbohlen aneinander angrenzen, sodass in jeder der drei Lagen jeweils eine Flachseite jeder Holzbohle in einer gemeinsamen Ebene der jeweiligen Lage liegt, wobei die Holzbohlen der Mittellage quer zur Längsrichtung der Holzbohlen der beiden Decklagen verlaufen, wodurch sich eine kreuzweise Anordnung der Holzbohlen in unmittelbar benachbarten Lagen ergibt, mit einer Mehrzahl von Schwalbenschwanzverbindungen, jeweils umfassend ein Zinkenstück und ein komplementäres Schwalbenstück, wobei die Holzbohlen der Mittellage und die Holzbohlen der ersten Decklage an ihren einander zugewandten Flachseiten mindestens eine erste Schwalbenschwanzverbindung sowie die Holzbohlen der Mittellage und die Holzbohlen der zweiten Decklage an ihren einander zugewandten Flachseiten mindestens eine zweite Schwalbenschwanzverbindung miteinander ausbilden, wobei die mindestens eine erste Schwalbenschwanzverbindung parallel zur Längenerstreckung der Holzbohlen der ersten Decklage und die zweite Schwalbenschwanzverbindung parallel zur Längenerstreckung der Holzbohlen der zweiten Decklage verläuft.

Auch betrifft die Erfindung eine Holzbohle, umfassend an ihrer einen Flachseite mindestens ein erstes Zinkenstück oder ein komplementäres erstes Schwalbenstück zur Herstellung mindestens einer ersten Schwalbenschwanzverbindung mit einer weiteren Holzbohle - genauer gesagt einem zum ersten Zinkenstück oder zum ersten Schwalbenstück komplementär ausgebildetes Schwalbenstück oder Zinkenstück - sowie an ihrer anderen Flachseite mindestens ein zweites Zinkenstück oder ein komplementäres zweites Schwalbenstück zur Herstellung mindestens einer zweiten Schwalbenschwanzverbindung mit einer weiteren Holzbohle (an dessen komplementärem Schwalbenstück oder Zinkenstück), wobei die mindestens eine, erste Schwalbenschwanzverbindung parallel zur Längenerstreckung der Holzbohle und die mindestens eine, zweite Schwalbenschwanzverbindung quer zur Längenerstreckung der Holzbohle verläuft.

Bevorzugt ist die Holzbohle zur Herstellung eines Holzbauelements nach der Erfindung eingerichtet und als Holzbohle für die Mittellage des Holzbauelements vorgesehen.

Weiterhin betrifft die Erfindung auch die Verwendung einer solchen Holzbohle zur Herstellung eines erfindungsgemäßen Holzbauelements.

Grundsätzlich gilt, dass die Holzbohlen der Mittellage identisch ausgeführt sein können und sich damit nach dem Klemmsteinprinzip mit den Holzbohlen der zwei Decklagen über die Schwalbenschwanzverbindungen und untereinander an deren Stirnseiten mittels der Feder-Nut-Verbindung lösbar fügen lassen. Gleiches gilt umgekehrt für die Holzbohlen der beiden Decklagen. Die Breite und Länge der Holzbohlen der Mittellage und die der Decklage kann auch identisch gewählt sein.

Grundsätzlich kann die Holzbohle aus Holz, insbesondere Konstruktionsvollholz, Leimholz, Leimbinder, WPC (Wood-Plastic-Composites) also einem Holzkunststoffverbundwerkstoff (HKV), insbesondere einem extrudierten Kunststoff (Thermoplast) mit Holzfasereinlage, hergestellt sein. Auch die Holzbohlen der Decklagen können aus den vorgenannten Materialien hergestellt sein.

Nach einer bevorzugten Ausführungsform sind die Holzbohlen des Holzbauelement aus Holz hergestellt.

Nach einer weiteren bevorzugten Ausführungsform sind die Holzbohlen des Holzbauelements aus Konstruktionsvollholz hergestellt.

Gemäß einer weiteren bevorzugten Ausführungsform sind die Holzbohlen des Holzbauelements aus Leimholz oder Leimbindermaterial hergestellt.

Nach einer weiteren bevorzugten Ausführungsform sind die Holzbohlen des Holzbauelements aus einem Holzkunststoffverbundwerkstoff hergestellt.

Gemäß einer bevorzugten Ausführungsform sind die Holzbohlen der wenigstens einen Mittellage aus einem anderen Material hergestellt als die Holzbohlen der ersten Decklage, vorzugsweise die Holzbohlen der ersten und der zweiten Decklage.

Es ist auch möglich, dass die Holzbohlen einer einzelnen Lage aus voneinander verschiedenen Materialien bestehen.

In einer bevorzugten Ausführungsform sind sämtliche Holzbohlen der Mittellage identisch ausgeführt.

Nach einer bevorzugten Ausführungsform sind sämtliche Holzbohlen der ersten Decklage identisch ausgeführt.

Nach einer bevorzugten Ausführungsform sind sämtliche Holzbohlen der zweiten Decklage identisch ausgeführt.

Gemäß einer weiteren bevorzugten Ausführungsform sind die Holzbohlen der Mittellage und die Holzbohlen wenigstens einer Decklage hinsichtlich ihrer Länge und/oder Breite identisch ausgeführt.

Das Vorgesagte gilt auch für den Fall, dass das Holzbauelement mehr als eine Mittellage umfasst.

Auch betrifft die Erfindung die Verwendung eines erfindungsgemäßen Holzbauelements zur Herstellung einer Wand oder einer Decke, bevorzugt einer senkrechten Wand.

Das erfindungsgemäße Holzbauelement eignet sich insbesondere zur Herstellung von Wänden und/oder Decken, bevorzugt von senkrechten Wänden, Trennwänden, Innenwänden, Außenwänden, Geschossdecken oder sonstigen Deckenbauteilen, insbesondere von selbsttragenden Wänden oder selbsttragenden Decken.

Auch betrifft die Erfindung einen Bausatz zur Herstellung eines Holzbauelements, umfassend, oder bestehend aus,
- mehrere Holzbohlen für wenigstens eine Mittellage,
- mehrere Holzbohlen für eine erste Decklage und
- mehrere Holzbohlen für eine zweite Decklage,
wobei die Holzbohlen komplementäre Schwalbenschwanzverbindungen und Feder-Nut-Verbindungen aufweisen, um zu einem erfindungsgemäßen Holzbauelement zusammengesetzt zu werden.

Der Bausatz kann auch mehrere Holzbohlen für weitere Mittellagen umfassen. Hierbei können zwei, drei, vier, fünf, sechs, sieben, acht, neun oder zehn Mittellagen umfasst sein.

Die Vorteile der Erfindung sollen nun anhand eines bevorzugten Ausführungsbeispiels und der Figuren näher dargestellt werden.

Es zeigen:
Fig. 1 eine schematische Darstellung einer Teilansicht eines Holzbauelements im zusammengebauten Zustand gemäß einer Ausführungsform;
Fig. 2 den Gegenstand von Fig. 1 in einer räumlichen Gesamtdarstellung;
Fig. 3 den Gegenstand von Fig. 2 in einer räumlichen Teildarstellung, bei der jeweils pro Lage eine erste Holzbohle ausgeblendet ist;
Fig. 4 eine räumliche Teilansicht der Holzbohle der Mittellage gemäß einer möglichen Ausführungsform;
Fig. 5 eine räumliche Teilansicht der Holzbohle der ersten Decklage gemäß einer möglichen Ausführungsform;
Fig. 6 eine räumliche Teilansicht der Holzbohle der zweiten Decklage gemäß einer möglichen Ausführungsform.

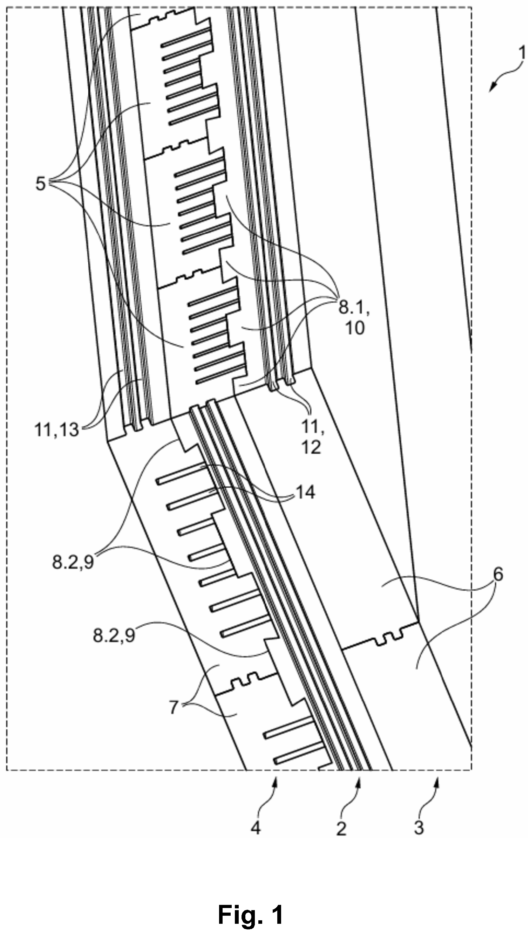

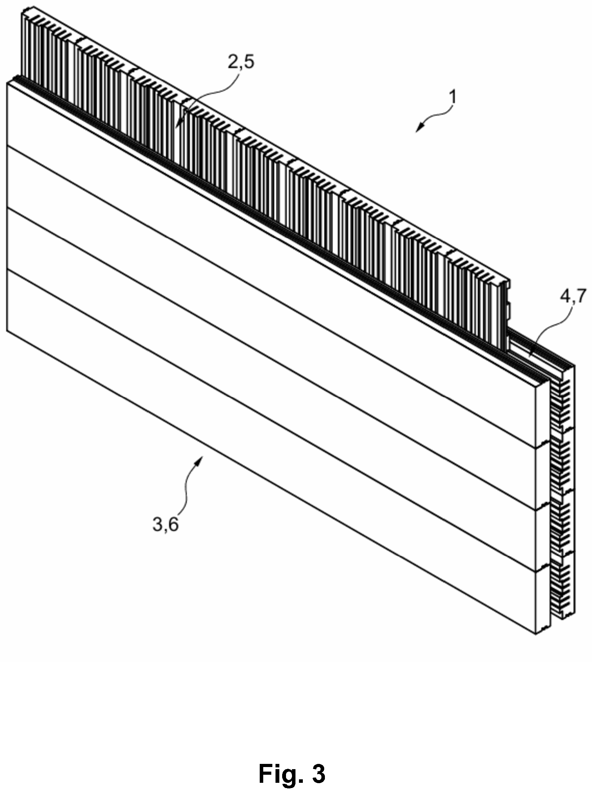

Fig. 1 zeigt eine schematische Darstellung einer Teilansicht eines Holzbauelements 1 im zusammengebauten Zustand gemäß einer möglichen Ausführungsform. Das Holzbauelement 1 ist plattenförmig aufgebaut und umfasst eine Mittellage 2 sowie eine erste Decklage 3 und eine zweite Decklage 4. Die Mittellage 2 besteht aus mehreren parallel verlaufenden Holzbohlen 5, deren Längserstreckung quer zur Längserstreckung der Holzbohlen 6 der ersten Decklage 3 und Holzbohlen 7 der zweiten Decklage 4 verläuft. Auch die erste Decklage 3 ist aus parallel zueinander mit deren einen Flachseite in einer Ebene angeordneten Holzbohlen 6 aufgebaut. Gleiches gilt für die zweite Decklage 4, die entsprechend aus Holzbohlen 7 aufgebaut ist. Daraus ergibt sich für das Holzbauelement 1 eine abwechselnd kreuzweise Anordnung der Holzbohlen 5, 6, 7, wobei die Holzbohlen 6 und 7 der beiden Decklagen 3, 4 parallel zueinander ausgerichtet sind und die Holzbohlen 5 der Mittellage 2 um 90° dazu versetzt angeordnet sind, der Länge nach gesehen. Man sieht dies besonders gut in Fig. 3.

Wie in der Fig. 1 gut erkennbar ist, sind zwischen den einander zugewandten Flachseiten der Mittellage 2 und der Decklagen 3, 4 Schwalbenschwanzverbindungen 8.1, 8.2 vorgesehen. Sie werden gemeinsam von der Mittellage 2 und den diese an den Flachseiten umgebenden Decklagen 3, 4 ausgebildet.

Jede Schwalbenschwanzverbindung 8.1, 8.2 besteht aus einem Zinkenstück 9 und einem komplementären Schwalbenstück 10. Die erste Schwalbenschwanzverbindung 8.1 verläuft - mit ihrer Längserstreckung - quer zur Längserstreckung der Holzbohlen 6 der ersten Decklage 3 und wird also von der ersten Decklage 3 und der Mittellage 2 gebildet.

Die zweite Schwalbenschwanzverbindung 8.2 verläuft - mit ihrer Längserstreckung - quer zur Längserstreckung der Holzbohlen 5 der Mittellage 2 und damit parallel zur Längserstreckung der Holzbohlen 7 der zweiten Decklage 4.

Nach einer bevorzugten Ausführungsform sind die Holzbohlen. (6, 7) der beiden Decklagen parallel zueinander ausgerichtet und die Holzbohlen der Mittellage (5) hierzu um 90° versetzt angeordnet.

Die Schwalbenschwanzverbindungen 8.1, 8.2 sind hier trapezförmig, könnten aber auch tannenbauförmig oder T-förmig ausgeführt sein. Die Schwalbenschwanzverbindungen 8.1, 8.2 werden ausschließlich durch die einander zugewandten Außenflächen der Mittellage 2 und der Decklagen 3, 4 gebildet, wodurch das Holzbauelement 1 nach dessen Montage selbsthemmend und selbsttragend ist.

Die Zinkenstücke 9 sind hier einstückig in den Holzbohlen 5 der Mittellage 2 ausgebildet, an der Flachseite, die der ersten Decklage 3 zugewandt ist. Sie werden von den komplementär ausgebildeten Schwalbenstücke 10 der unmittelbar an diese angrenzenden Holzbohlen 6 der ersten Decklagen 3 aufgenommen. Bei der zweiten Decklage 4 ist es vorliegend umgekehrt, hier bilden die Holzbohlen 7 der zweiten Decklage die Zinkenstücke 9 und die Holzbohlen 5 der Mittellage die Schwalbenstücke 10 aus. Alternativ kann die Ausgestaltung auch umgekehrt erfolgen.

Nach einer bevorzugten Ausführungsform weist jede Holzbohle (5) der Mittellage an wenigstens einer ihrer Flachseiten eine mittig angeordnete vollständige Schwalbenschwanzverbindung sowie zwei an den Stirnseiten angeordnete Teil-Schwalbenschwanzverbindungen auf.

Die Schwalbenschwanzverbindungen 8.1, 8.2 sind so geformt, dass sie durch reinen Formschluss halten, wobei sie durch mindestens drei gegenüberliegende Flächenpaare der Holzbohlen 5, 6, 7 translatorische und rotatorische Freiheitsgrade sperren. Die Verbindung ist frei von weiteren Verbindungsmitteln wie Leim oder Schrauben.

Die Holzbohlen 5, 6, 7 jeder Lage 2, 3, 4 sind an ihren (Längs-)Stirnseiten über Feder-Nut-Verbindungen 11 miteinander verbunden. Dabei ist jede Holzbohle 5, 6, 7 an einer Stirnseite mit einer Nut 12 und an der gegenüberliegenden Stirnseite mit einer komplementären Feder 13 versehen.

Die Holzbohlen 5 der Mittellage 2 und der ersten Decklage 3 weisen vorliegend an einer Flachseite Entlastungsnuten 14 auf, die parallel zur Längserstreckung der jeweiligen Holzbohlen 5, 6 verlaufen und Spannungen im Material ausgleichen sollen.

Wie man erkennt, sind pro Holzbohle 5 der Mittellage, hier an der ersten Schwalbenschwanzverbindung 8.1, pro Holzbohle 5 zwei Schwalbenschwanzverbindungen vorgesehen, nämlich eine volle in der Mitte und zwei halbe an den (Längs-)Stirnseite der Holzbohle 5. Die seitlichen ersten Schwalbenschwanzverbindungen 8.1 werden gemeinsam über von den einander zugewandten (Längs-)Stirnseiten der Holzbohlen 5 gebildet. Wie man an den zweiten Schwalbenschwanzverbindungen 8.2 der Holzbohlen 5 der Mittellage 2 sieht, sind diese im Abstand so bemessen, dass die quer dazu verlaufenden Holzbohlen 7 der zweiten Decklage 4 ebenfalls pro Holzbohle 7 "zwei" zweite Schwalbenschwanzverbindungen 8.2 ausbilden, nämlich eine erste in der Mitte und zwei entlang der einander zugewandten (Längs-)Stirnseiten der Holzbohlen 7. Damit sind die Abstände der ersten und zweiten Schwalbenschwanzverbindungen 8.1 und 8.2 zueinander gleich.

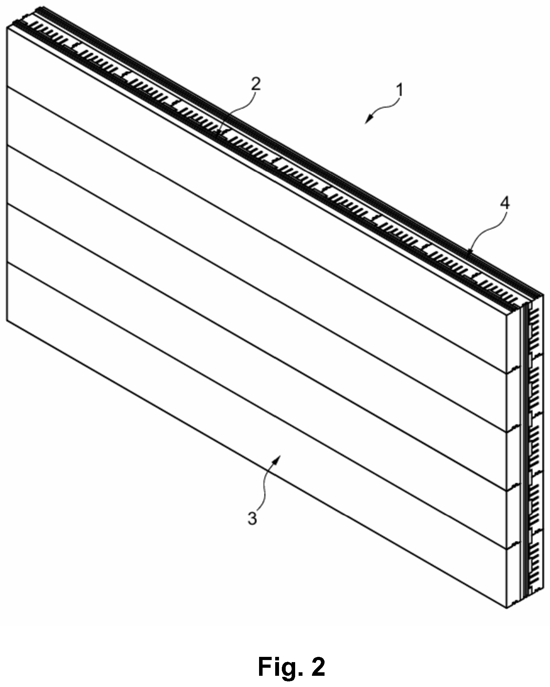

Fig. 2 zeigt den Gegenstand von Fig. 1 in einer im Gegensatz zur Fig. 1 gedrehten räumlichen Gesamtdarstellung als ein Holzbauelement 1, das jeweils aus fünf Holzbohlen 5, 6, 7 pro Lage 2, 3, 4 hergestellt und fertig montiert ist. Für die Montage werden zunächst die Holzbohlen 5 der Mittellage 2 auf einer Ebene, wie einem Boden ausgelegt, sodass sich die Längs-Stirnseiten einander unmittelbar angrenzender Holzbohlen 5 berühren und untereinander die Nut-und-Feder-Verbindung 11 realisieren. Sodann werden die Holzbohlen 6 der ersten Decklage 3 seitlich über die Stirnseiten, hier die Kurz-Stirnseiten der Holzbohlen 5 mit den Holzbohlen 5 gefügt, siehe Fig. 1. Dazu werden die Holzbohlen 6 der Decklage nacheinander mit ihren Zinken- und Schwalbenstücken 9, 10 in die komplementär ausgeführten Zinken- und Schwalbenstücke 9, 10 der Holzbohlen 5 der Mittellage eingeführt, sodass die Mehrzahl von ersten Schwalbenschwanzverbindung 8.1 hergestellt wird. Danach wird das teils aufgebaute Holzbauelement 1 auf dessen andere Flachseite umgedreht und es werden entsprechend die Holzbohlen 7 der zweiten Decklage 4 in mit deren Zinken- und Schwalbenstücken 9, 10 in die komplementär ausgebildeten Zinken- und Schwalbenstücke 9, 10 der Holzbohlen 5 der Mittellage 2 eingeführt, hier über die Längs-Stirnseiten der der Holzbohlen 5 der Mittellage 2, bis alle Schwalbenschwanzverbindungen 8.2 hergestellt und sich die Darstellung wie in Fig. 2 dargestellt, ergibt.

In Fig. 3 ist die Darstellung von Fig. 2 gezeigt, wobei der Übersicht halber jeweils eine erste Holzbohle 5, 6, 7 in der jeweiligen Lage 2, 3, 4 ausgeblendet ist, um besser sehen zu können, wie diese angeordnet sind.

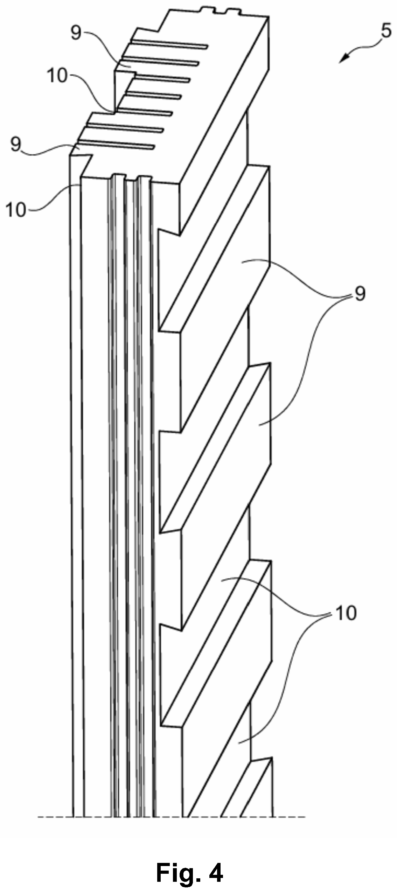

Die Fig. 4 zeigt eine räumliche Teilansicht einer Holzbohle 5 der Mittellage 2. Rechts sind die Zinkenstücke 9 und die Schwalbenstücke 10 der Flachseite, die der zweiten Decklage 4 zugewandt sind, angeordnet. Links hingegen sind die Zinkenstücke 9 und die Schwalbenstücke 10 der Flachseite zu sehen, die der ersten Decklage 3 zugewandt sind. Wie man sieht, verlaufen die Längsrichtungen, also die Längsseiten der Wandungen der beiden Schwalbenschwanzverbindungen 8.1, 8.2 beider der Decklagen 3, 4 zugewandten Seiten der Holzbohlen der Mittellage 5 quer also senkrecht zueinander.

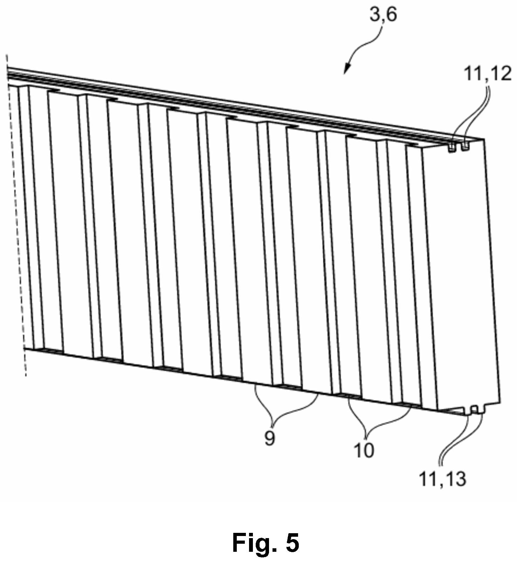

Weiterhin zeigt die Fig. 5 eine räumliche Teilansicht der Holzbohle 6 der ersten Decklage 3 gemäß einer möglichen Ausführungsform. Man sieht dort gut die quer zur Längserstreckung der Holzbohle 6 verlaufenden Zinkenstücke 9 und die Schwalbenstücke 10 der Flachseite, die der Mittellage 2 zugewandt ist. Dort sind auch die Nuten 12 und die Federn 13 der Feder-Nut-Verbindung 11 gut erkennbar.

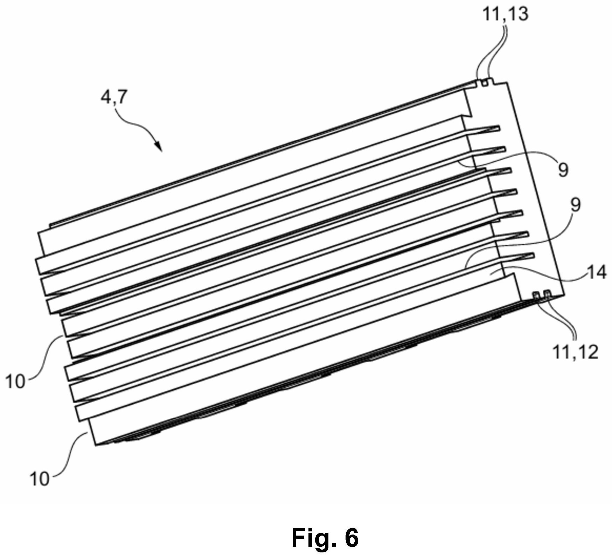

In Fig. 6 ist eine räumliche Teilansicht der Holzbohle der zweiten Decklage gemäß einer möglichen Ausführungsform gezeigt. Man erkennt dort, dass die Zinkenstücke 9 und die Schwalbenstücke 10 parallel zur Längsseite der Holzbohle 7 verlaufen. Auch die Entlastungsnuten 14 sind gut erkennbar.

Unabhängig von den dargestellten Ausführungsformen gilt: Das erfindungsgemäße Holzbauelement 1 ist besonders stabil und weist durch die rein formschlüssige Verbindung der Lagen eine hohe Tragfähigkeit auf. Es kann ohne Werkzeug, ausschließlich durch Stecken oder Ineinanderschieben montiert oder demontiert werden. Das Holzbauelement 1 ist bevorzugt vollständig frei von Leim oder mechanischen Verbindungsmitteln und kann vollständig in Einzelteile zerlegt werden. Die selbsthemmende Wirkung der Schwalbenschwanzverbindungen 8 gewährleistet zudem eine dauerhafte Formstabilität.

Die Ausbildung der Stirnseiten der Holzbohlen 5, 6, 7 jeder Lage 2, 3, 4 mit einer komplementären Nut- und Federverbindung 11 bewirkt nicht nur eine formschlüssige Verbindung der einzelnen Holzbohlen 5, 6, 7 innerhalb einer Lage 2, 3, 4, sondern führt zusätzlich zu einer hohen Passgenauigkeit der Verbindungen. Diese enge und flächige Fügung der Stirnseiten trägt erheblich zur Luftdichtigkeit des gesamten Holzbauelements 1 bei. Insbesondere im Bereich der Gebäudehülle kann dadurch auf zusätzliche Abdichtungsmaßnahmen verzichtet werden. Dies führt zu einer signifikanten Reduktion von Wärmeverlusten sowie zu einer Vermeidung konvektiver Luftströme, was die energieeffiziente Bauweise unterstützt.

Ein wesentliches Merkmal des erfindungsgemäßen Holzbauelements 1 ist der Kreuzlagenaufbau, bei dem die Holzbohlen 5 der Mittellage 2 quer zur Längsrichtung der Holzbohlen 6, 7 der beiden Decklagen 3, 4 verlaufen. Das bedeutet, dass die Längserstreckungen der unmittelbar aneinander angrenzenden Lagen 2, 3, 4 um 90° gegeneinander versetzt sind.

Diese kreuzweise Ausrichtung der Holzbohlen 5, 6, 7 sorgt dafür, dass quell- und schwindbedingte Dimensionsänderungen des Holzes in der Fläche weitgehend kompensiert werden, da sich die Holzbohlen 5, 6, 7 in orthogonaler Richtung gegenseitig stabilisieren. Dadurch wird das sogenannte "Arbeiten des Holzes" deutlich reduziert. Das Holzbauelement 1 weist eine hohe Formstabilität und Maßhaltigkeit auf - auch bei wechselnden klimatischen Bedingungen.

Dies verhindert zuverlässig Verformungen, Rissbildungen und Fugenausbildung, wie sie bei einlagigen oder nicht kreuzweise verleimten Holzbauelementen 1 häufig auftreten. Der Kreuzlagenaufbau ist daher besonders vorteilhaft für den tragenden Holzbau, bei dem dauerhafte Maßhaltigkeit und mechanische Integrität essenziell sind.

Diese konstruktiven Merkmale - Nut- und Federverbindung 11, Schwalbenschwanzverbindung 8.1, 8.2, insbesondere mit Selbsthemmung sowie der Kreuzlagenaufbau - wirken im Zusammenspiel als integrale Lösung zur gestellten Aufgabe und ermöglichen ein vollständig selbsttragendes, ökologisches, dauerhaft stabiles und rein formschlüssig aufgebautes Holzbauelement, das ohne weitere Verbindungselemente auskommt und sowohl montagefreundlich als auch rückbaubar ist.

Die im Rahmen der vorliegenden Beschreibung, der Ansprüche und/oder der Figuren offenbarten Merkmale der Erfindung können sowohl einzeln als auch in jeder technisch sinnvollen Kombination für die Verwirklichung der Erfindung wesentlich sein. Insbesondere können Merkmale unterschiedlicher Ausführungsformen miteinander kombiniert werden, soweit sich hieraus keine technische Unvereinbarkeit ergibt.

## Patentansprüche

1. Holzbauelement (1), umfassend eine Mittellage (2) sowie zwei Decklagen (3, 4), die beidseitig der Mittellage (2) angeordnet sind, wobei jede der drei Lagen aus mehreren Holzbohlen (5, 6, 7) hergestellt ist, wobei die Holzbohlen (5, 6, 7) innerhalb jeder Lage in Längsrichtung derart parallel zueinander angeordnet sind, dass die einander zugewandten Stirnseiten benachbarter Holzbohlen (5, 6, 7) aneinander angrenzen, sodass in jeder der drei Lagen jeweils eine Flachseite jeder Holzbohle (5, 6, 7) in einer gemeinsamen Ebene der jeweiligen Lage liegt, wobei die Holzbohlen (5, 6, 7) der Mittellage (2) quer zur Längsrichtung der Holzbohlen (5, 6, 7) der beiden Decklagen (3, 4) verlaufen, wodurch sich eine kreuzweise Anordnung der Holzbohlen (5, 6, 7) in unmittelbar benachbarten Lagen ergibt, mit einer Mehrzahl von Schwalbenschwanzverbindungen (8.1, 8.2), jeweils umfassend ein Zinkenstück (9) und ein komplementäres Schwalbenstück (10), wobei die Holzbohlen (5, 6, 7) der Mittellage (2) und die Holzbohlen (5, 6, 7) der ersten Decklage (3, 4) an ihren einander zugewandten Flachseiten mindestens eine erste Schwalbenschwanzverbindung (8.1, 8.2) sowie die Holzbohlen (5, 6, 7) der Mittellage (2) und die Holzbohlen (5, 6, 7) der zweiten Decklage (3, 4) an ihren einander zugewandten Flachseiten mindestens eine zweite Schwalbenschwanzverbindung (8.1, 8.2) miteinander ausbilden, wobei die mindestens eine erste Schwalbenschwanzverbindung (8.1, 8.2) quer zur Längenerstreckung der Holzbohlen (5, 6, 7) der ersten Decklage (3, 4) und die zweite Schwalbenschwanzverbindung (8.1, 8.2) parallel zur Längenerstreckung der Holzbohlen (5, 6, 7) der zweiten Decklage (3, 4) verläuft.

2. Holzbauelement (1) nach dem vorhergehenden Anspruch, **dadurch gekennzeichnet, dass** die Holzbohlen (5, 6, 7) der drei Lagen lediglich mittels der Schwalbenschwanzverbindungen (8.1, 8.2) und damit ausschließlich formschlüssig untereinander verbunden oder verbindbar sind, wobei bevorzugt die Schwalbenschwanzverbindungen (8.1, 8.2) einstückig von den entsprechenden einander gegenüberliegenden Flachseiten der jeweiligen Holzbohlen (5, 6, 7) der Mittellage (2) und der Decklage (3, 4) ausgebildet werden.

3. Holzbauelement (1) nach einem der vorhergehenden Ansprüche, **dadurch gekennzeichnet, dass** das Zinkenstück (9) von der Holzbohle (5, 6, 7) der Mittellage (2) und das komplementäre Schwalbenstück (10) von der Holzbohle (5, 6, 7) der Decklage (3, 4) ausgebildet ist - oder umgekehrt - und dass das Zinkenstück (9) oder das Schwalbenstück (10) einstückig mit der Holzbohle (5, 6, 7) ausgeführt ist oder von dieser ausgebildet ist.

4. Holzbauelement (1) nach einem der vorhergehenden Ansprüche, **dadurch gekennzeichnet, dass** die Schwalbenschwanzverbindungen (8.1, 8.2) im Wesentlichen trapezförmig, tannenbauförmig oder T-förmig ausgeführt sind.

5. Holzbauelement (1) nach einem der vorhergehenden Ansprüche, **dadurch gekennzeichnet, dass** sich die einander zugewandten Flachseiten der Decklagen (3, 4) und der Mittellage (2) und die einander zugewandten Stirnseiten der Holzbohlen (5, 6, 7) einer jeweiligen Lage im zusammengebauten Zustand des Holzbauelements (1) untereinander vollflächig berühren; und/oder dass die der Mittellage abgewandte Flachseite (Außenseite) wenigstens einer Decklage, bevorzugt die der Mittellage abgewandten Flachseiten (Außenseiten) der beiden Decklagen, eben ausgeführt sind.

6. Holzbauelement (1) nach einem der vorhergehenden Ansprüche, **dadurch gekennzeichnet, dass** die drei Lagen frei von zusätzlichen, bevorzugt kraft- und/oder formschlüssigen, Verbindungsmitteln sind, wobei vorzugsweise die Holzbohlen (5, 6, 7) einer jeden Lage untereinander verleimt sind und/oder wobei die Mittellage (2) und die Decklagen (3, 4) miteinander verleimt sind.

7. Holzbauelement (1) nach einem der vorhergehenden Ansprüche, **dadurch gekennzeichnet, dass** zumindest die Holzbohlen (5, 6, 7) der Mittellage (2) an wenigstens einer ihrer Flachseiten mit Entlastungsnuten (14) versehen sind, wobei die Entlastungsnuten (14) parallel zur Längserstreckung der Holzbohle (5, 6, 7), insbesondere parallel zur Längenerstreckung der durch die Holzbohlen (5, 6, 7) verlaufenden Schwalbenschwanzverbindungen (8.1, 8.2) verlaufen.

8. Holzbauelement (1) nach Anspruch 7, **dadurch gekennzeichnet, dass** zusätzlich Holzbohlen wenigstens einer Decklage, vorzugsweise Holzbohlen einer ersten und einer zweiten Decklage, Entlastungsnuten aufweisen.

9. Holzbauelement (1) nach einem der vorhergehenden Ansprüche, **dadurch gekennzeichnet, dass** die Holzbohlen (5, 6, 7) an den einander zugewandten Stirnseiten der jeweiligen Lage entlang deren Längenerstreckung mittels einer Feder-Nut-Verbindung (11) formschlüssig miteinander verbindbar ausgeführt sind, wobei die eine Stirnseite der einen Holzbohle (5, 6, 7) die Nut (12) und die andere Stirnseite derselben Holzbohle (5, 6, 7) die zur Nut (12) komplementäre Feder (13) ausbildet.

10. Holzbauelement (1) nach einem der vorhergehenden Ansprüche, **dadurch gekennzeichnet, dass** das Holzbauelement vollständig lösbar, ausschließlich von Hand montierbar und demontierbar sowie frei von zusätzlichen Verbindungsmitteln ist.

11. Holzbauelement (1) nach einem der vorhergehenden Ansprüche, **dadurch gekennzeichnet, dass** das Holzbauelement frei von Schrauben, Nägeln und/oder Bolzen ist; und/oder dass das Holzbauelement frei von Leim ist.

12. Holzbohle (5, 6, 7), umfassend an ihrer einen Flachseite mindestens ein erstes Zinkenstück (9) oder ein komplementäres erstes Schwalbenstück (10) zur Herstellung mindestens einer ersten Schwalbenschwanzverbindung (8.1, 8.2) mit einer weiteren Holzbohle (5, 6, 7) sowie an ihrer anderen Flachseite mindestens ein zweites Zinkenstück (9) oder ein komplementäres zweites Schwalbenstück (10) zur Herstellung mindestens einer zweiten Schwalbenschwanzverbindung (8.1, 8.2) mit einer weiteren Holzbohle (5, 6, 7), wobei die mindestens eine, erste Schwalbenschwanzverbindung (8.1, 8.2) parallel zur Längenerstreckung der Holzbohle (5, 6, 7) und die mindestens eine, zweite Schwalbenschwanzverbindung (8.1, 8.2) quer zur Längenerstreckung der Holzbohle (5, 6, 7) verläuft, wobei bevorzugt die Holzbohle (5, 6, 7) zur Herstellung eines Holzbauelements (1) nach einem der vorhergehenden Ansprüche eingerichtet ist und als Holzbohle (5, 6, 7) für die Mittellage (2) des Holzbauelements (1) dient.

13. Verwendung einer Holzbohle (5, 6, 7) nach Anspruch 12 zur Herstellung eines Holzbauelements (1) nach einem der Ansprüche 1 - 11.

14. Verwendung eines Holzbauelements (1) nach einem der Ansprüche 1 - 11 zur Herstellung einer Wand oder einer Decke, bevorzugt einer senkrechten Wand.

15. Bausatz zur Herstellung eines Holzbauelements, umfassend
- mehrere Holzbohlen für wenigstens eine Mittellage,
- mehrere Holzbohlen für eine erste Decklage und
- mehrere Holzbohlen für eine zweite Decklage,
wobei die Holzbohlen komplementäre Schwalbenschwanzverbindungen und Feder-Nut-Verbindungen aufweisen, um zu einem Holzbauelement nach einem der Ansprüche 1 - 11 zusammengesetzt zu werden.
